# EUROPÄISCHE PATENTSCHRIFT

(11) **EP 2 318 297 B1**
(45) Veröffentlichungstag und Bekanntmachung des Hinweises auf die Patenterteilung: **10.04.2013**
(21) Anmeldenummer: 09776819.6
(22) Anmeldetag: 24.06.2009
(51) Int. Cl.: B65G 47/248, B08B 9/20

(54) **VERFAHREN UND VORRICHTUNG ZUM WENDEN EINES BEHÄLTNISSES**
METHOD AND DEVICE FOR TURNING OVER A CONTAINER
PROCÉDÉ ET DISPOSITIF POUR RETOURNER UN RÉCIPIENT

(30) Priorität: 23.07.2008 DE 102008034232
(43) Veröffentlichungstag der Anmeldung: 11.05.2011
(73) Patentinhaber: Induflex Robert Morgan e.K., 27337 Blender (DE)
(72) Erfinder: MORGAN, Robert, 27337 Blender (DE)
(74) Vertreter: Eisenführ, Speiser & Partner
(86) Internationale Anmeldenummer: PCT/EP2009/004542
(87) Internationale Veröffentlichungsnummer: WO 2010/009792

(56) Entgegenhaltungen:
- EP-A- 0 761 590
- EP-A- 0 764 060

## Beschreibung

Die Erfindung betrifft ein Verfahren bzw. eine Vorrichtung zum Wenden, bevorzugt mehrfachen Wenden eines Behältnisse gemäß dem Oberbegriff des Ansprüche 8 und 1. Ein Behältnis gemäß der vorliegenden Anmeldung kann jedwedes Behältnis aus verschiedenen Materialien sein, z. B. eine Glasflasche oder auch eine PET-Flasche unterschiedlicher Größen, die gemäß den HACCP-Anforderungen, Verordnung 178 /2002 Artikel 14, 18 und 19 genügen müssen.

Wenn solche Behältnisse in einem Abfüllprozess für ein flüssiges Nahrungsmittel, z. B. ein Getränk, eingesetzt werden, so muss ein solches Behältnis wenigstens in der Abfüllkette vor der Befüllung einmal so gewendet werden, dass es mit seiner Öffnung zum Boden hin, also nach unten hin, zeigt, um sicherzustellen, dass etwaige Gegenstände, die in das Behältnis hineingefallen sein könnten, aus der Öffnung herausfallen können.

Vor der Befüllung mit dem flüssigen Nahrungsmittel ist aber auch das Behältnis zu reinigen, zu sterilisieren, evtl. auch zu trocknen und dergl., um es dann anschließend der Befüllung zuzuführen.

Für die Lebensmittel verarbeitenden Unternehmen gelten strenge Auflagen und Gesetze und maßgeblich werden diese in der bereits erwähnten HACCP (Gefährdungsanalyse und kritische Lenkungspunkte) als Branchenrichtlinie festgelegt.

Darin enthalten ist die bereits erwähnte Forderung, dass Flaschen, insbesondere PET-Flaschen vor dem Befüllen wenigstens einmal gewendet, bzw. auf den Kopf gestellt werden müssen, um eventuelle Fremdkörper oder andere Verunreinigungen aus der Flasche (durch Schwerkraft) zu entfernen. Gleiches gilt auch für die Rohlinge der PET-Flaschen, den sog. "Preforms". In beiden Fällen ist die Flaschenöffnung in Form, Größe und Gewinde bereits vollständig ausgeformt und wird später nicht mehr verändert.

Soll nun in der gesamten Abfülllinie auch noch eine Wendestation eingeführt werden, so ist dies unter Umständen nur sehr schwierig möglich, weil dazu auch in der Abfülllinie Platz benötigt wird und dieses Platzproblem ist dann besonders groß, wenn nicht nur den unmittelbarsten HACCP-Vorschriften genüge getan werden soll, indem nur das Behältnis einmal auf den Kopf gestellt wird, sondern wenn auch gleichzeitig in diesem Bereich der Abfülllinie weitere Bearbeitungs- oder Behandlungsschritte durchgeführt werden sollen, z. B. das Behältnis bzw. die Flasche gereinigt werden soll, desinfiziert werden soll, sterilisiert werden soll, getrocknet werden soll oder auch bereits in einem ersten Schritt mit einem Nahrungsmittelzusatz befüllt werden soll.

Aufgabe der vorliegenden Erfindung ist es daher, eine Möglichkeit vorzusehen, dass bei geringstmöglichem Platzbedarf und mit einer einfachsten Anordnung wenigstens die einmalige Wendung des Behältnisses gemäß den HACCP-Vorschriften ermöglicht wird, bevorzugt auch mehrere Behandlungsschritte durchgeführt werden können.

Erfindungsgemäß wird die Aufgabe mit einer Vorrichtung mit den Merkmalen nach Anspruch 1 gelöst. Vorteilhafte Weiterbildungen sind in den Unteransprüchen sowie in dem Verfahrensanspruch 8 beschrieben.

Die erfindungsgemäße Vorrichtung ermöglicht es, dass bei einer relativ geringen - in linearer Transportrichtung betrachteten - Länge der erfindungsgemäßen Vorrichtung, ein mehrfach langer Umlaufweg - entlang der Schnecke - zurückgelegt wird und somit entlang des Umlaufweges auch mehrere Behandlungsstationen bzw. Behandlungsschritte durchgeführt werden können, z. B. das Innere des Gefäßes mit Wasserstoffperoxid desinfiziert werden kann, um anschließend das Gefäß mittels Hepa-Luft von innen zu trocknen, wobei bei dem Trocknungsprozess gleichzeitig restlich verbliebene Fremdkörper ausgeblasen werden.

Für das Verfahren spielt das Volumen des Behältnisses keine Rolle.

Im Vergleich zu bereits bestehenden Verfahren benötigt die Erfindung nur einen Bruchteil der Stellfläche und erlaubt zusätzlich weitere Anwendungen. Außerdem ist die erfindungsgemäße Vorrichtung mit geringem zeitlichem Aufwand auf verschiedene Behältnis-öffnungsgrößen umzurüsten.

Die Erfindung ist nachfolgend an einem Ausführungsbeispiel zeichnerisch erläutert.

Die Zeichnungen zeigen in
- Figur 1: verschiedene Ansichten des stehenden Teils einer erfindungsgemäßen Einrichtung;
- Figur 2: die Außenansicht einer erfindungsgemäßen Einrichtung von oben;
- Figur 3: eine perspektivische Ansicht der gesamten erfindungsgemäßen Einrichtung;
- Figur 4: Ansichten eines typischen Behältnisses zur Aufnahme der erfindungsgemäßen Einrichtung;
- Figur 5: eine Preform eines Behältnisses;
- Figur 6: eine perspektivische Ansicht einer erfindungsgemäßen Einrichtung;
- Figur 7: einen Blick in das Innere der erfindungsgemäßen Einrichtung beim Betrieb;
- Figur 8: eine Seitenansicht einer erfindungsgemäßen Einrichtung beim Betrieb;
- Figur 9: eine Seitenansicht einer erfindungsgemäßen Einrichtung im Bereich des Einlaufs von einem Behältnis in der erfindungsgemäßen Einrichtung.

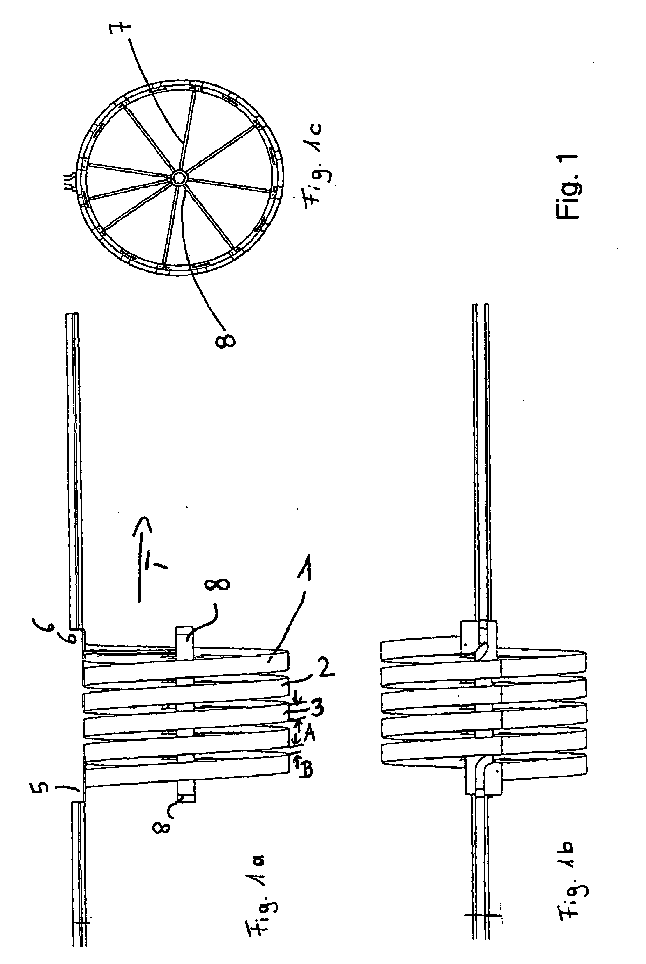

Figur 1 zeigt den stehenden Teil einer erfindungsgemäßen Wendeeinrichtung. Der stehende Teil ist nach Art einer Schnecke ausgebildet, wobei die Schneckensteigung dem jeweiligen Anwendungszweck angepasst ist. Der stehende Teil in dem schneckenförmig verlaufenden Abschnitt 2 der erfindungsgemäßen Einrichtung ist im Wesentlichen eine Schiene, Leiste oder dergl. oder auch ein Blech 3 einer bestimmten Breite A so zu einer Schnecke geformt, dass sich zwischen den einzelnen Materialabschnitten des Blechs ein im Wesentlichen gleichbleibender Abstand B einstellt.

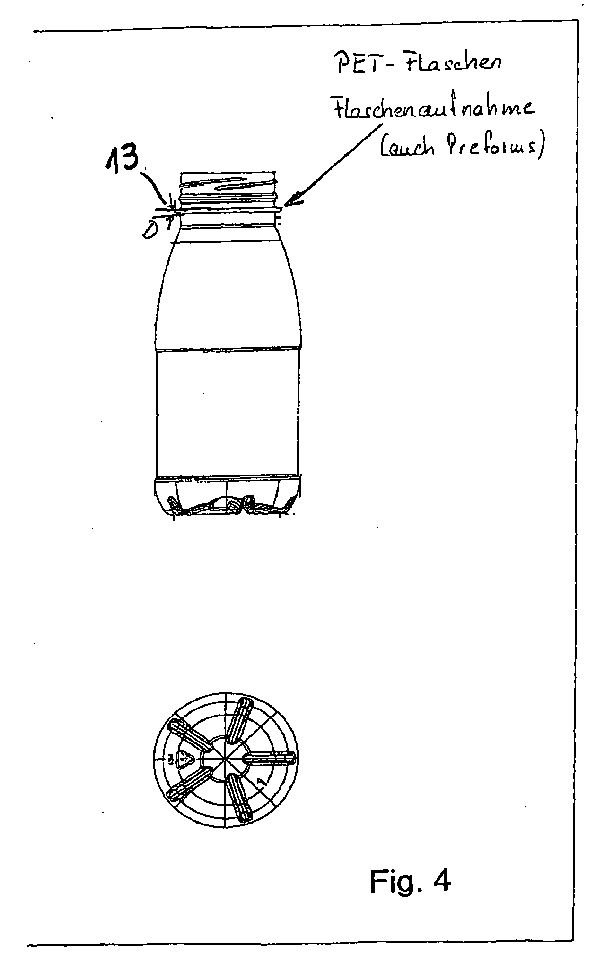

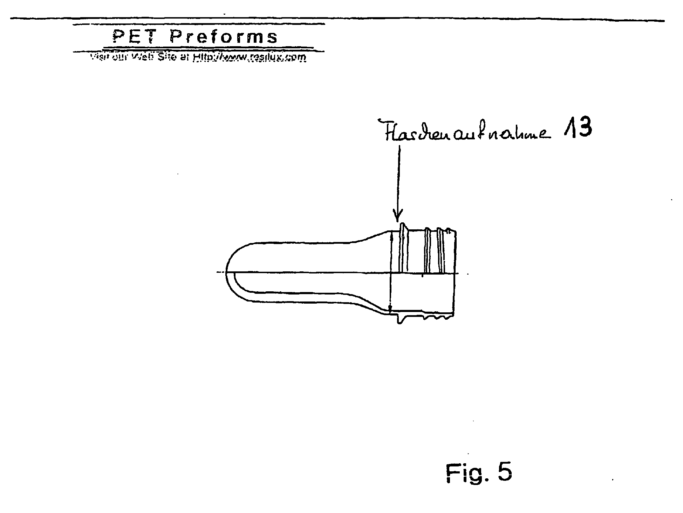

Dieser Abstand B ist geringer als der Durchmesser einer radial nach außen stehenden Ausweitung im Öffnungs- bzw. Kragenbereich eines Behältnisses, wie z. B. einer PET-Flasche gemäß den Figuren 4 und 5 (hierzu später mehr).

Im dargestellten Beispiel nach Figur 1a (Seitenansicht) kommen Behältnisse, wie z. B. Flaschen im Bereich des Einlaufs 5 in den schneckenförmig verlaufenden Bereich der erfindungsgemäßen Einrichtung und verlassen diesen im Bereich des Auslaufs 6, um die Gefäße in Transportrichtung T (Pfeil) zu befördern.

Im Bereich des Einlaufs wird die Flasche so zwischen dem Abstand b der Schnecke aufgenommen, dass der radial aufgeweitete Kragen der Flasche außerhalb der Schnecke liegt und im oberen Teil der Schnecke auf der Schnecke liegt.

In Figur 1b ist besonders gut der Ein- und Auslauf der erfindungsgemäßen Einrichtung zu sehen. Figur 1c zeigt eine Seitenansicht des stehenden Teils einer erfindungsgemäßen Einrichtung. Die dortigen Streben 7 dienen der mechanischen Aufnahme bzw. Stabilität und der in Figur 1a zu erkennende Zapfen 8 dient der Aufnahme des umlaufenden, rotierenden Teils (hierzu später).

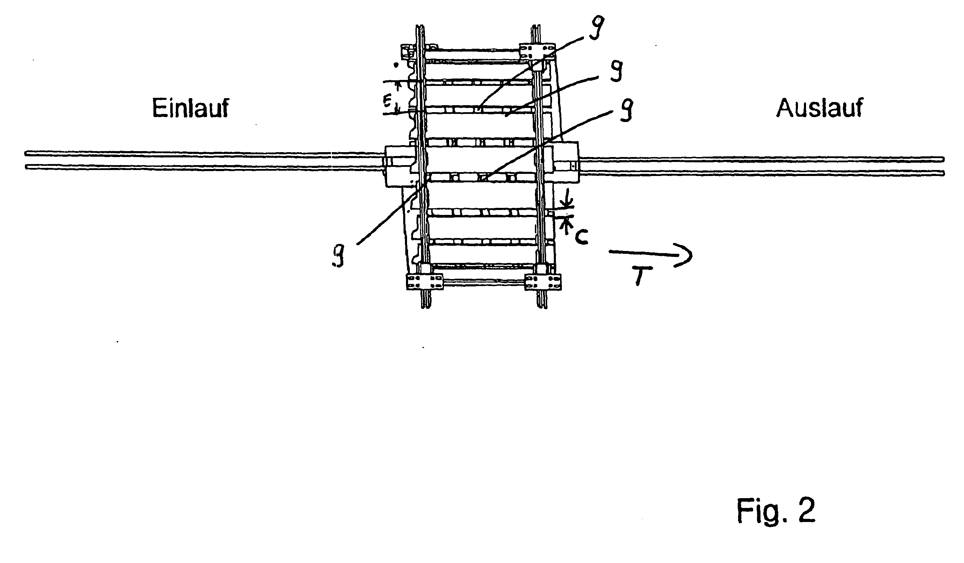

Figur 2 zeigt nun die erfindungsgemäße Einrichtung mit dem stehenden, als auch rotierenden Teil von oben mit dem Einlauf und dem Auslauf.

Wie zu erkennen, ist der zu rotierende Teil nach Art einer (in Grundform zylindrischen) Trommel ausgebildet, welche außenseitig gleichbleibend beabstandete Bleche, Leisten oder dergl. aufnimmt, wobei der Abstand C der Leisten zueinander größer ist als der Durchmesser der Öffnung der aufzunehmenden Flaschen, aber kleiner ist als der Durchmesser der Kragenaufweitung.

Durch die so gestaltete Anordnung bilden sich zwischen dem schneckenförmigen stehenden Teil und dem umlaufenden rotierenden Teil Öffnungen 9 aus, die nebeneinander eine Reihe bilden und durch die Vielzahl der Leisten werden mehrere Reihen parallel über den Umfang im Abstand E verteilt gebildet. Im dargestellten Beispiel gibt es innerhalb einer Reihe funf Öffnungen, so dass innerhalb einer Reihe funf Gefäße, also Flaschen aufgenommen werden können (hierzu später mehr).

Wenn der umlaufende, rotierende Teil sich bewegt, so wird eine einzelne Flasche durch den Materialabschnitt des schneckenförmigen Teils geführt und dabei auch stets (abhängig von der Schneckensteigung) ein kleines Stück in Richtung Transportrichtung T verschoben.

Wird also eine Flasche vom Einlauf herkommend von der erfindungsgemäßen Vorrichtung aufgenommen, so liegt sie - solange noch ihre Öffnung nach oben gerichtet ist - mit ihrem radial umlaufenden Kragen auf den schneckenförmig verlaufenden Materialabschnitten einerseits auf und wird andererseits gleichzeitig von der in Umlaufrichtung hinter der Flasche liegenden Leiste des rotierenden Teils berührt und in Umlaufrichtung geschoben.

Der umlaufende Teil der erfindungsgemäßen Einrichtung wie auch der stehende Teil der Einrichtung sind wenigstens mit einem Abstand D zueinander versehen, welcher größer ist als die Dicke der kragenartigen Ausweitung am Flaschenhals (Figur 4).

Beim Durchfahren der erfindungsgemäßen Vorrichtung kann mithin die Flasche mit ihrem oberen Rand der Öffnung noch über dem Materialabschnitt des umlaufenden rotierenden Teils nach außen hin hinausragen.

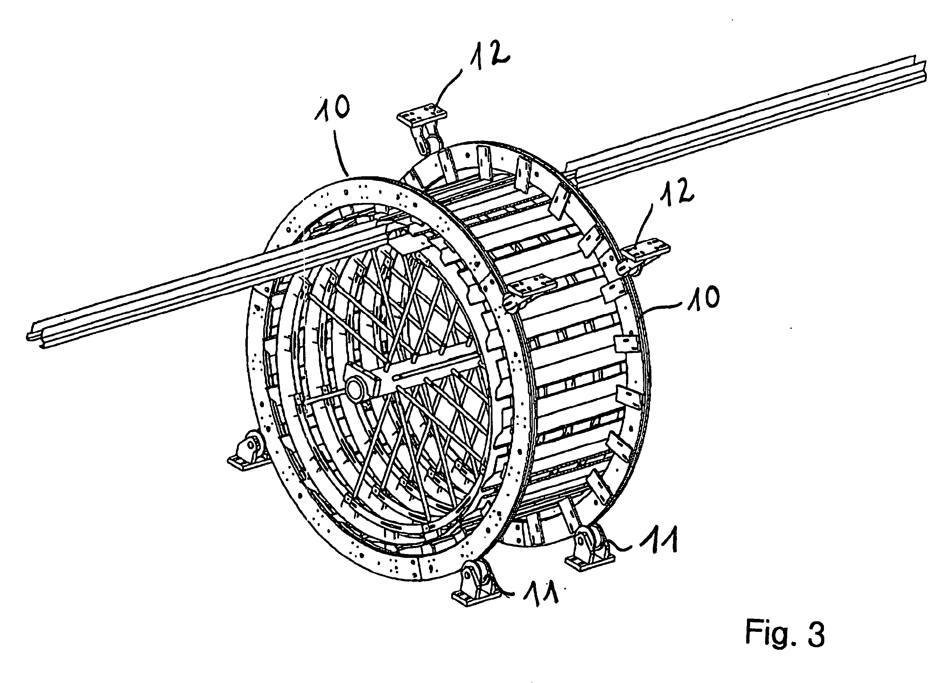

Figur 3 zeigt eine erfindungsgemäße Einrichtung mit dem stehenden, schneckenartig verlaufenden Teil einerseits und dem rotierenden Teil andererseits mit dem Ein- und Auslauf in perspektivischer Ansicht.

Im dargestellten Beispiel weist der rotierende Teil an seinen äußeren Enden zwei umlaufende Reifen 10 auf, die auf Rollen 11 am Boden lagern und auch von weiteren Rollen 12 geführt werden.

Figur 4 zeigt ein übliches Behältnis, nämlich eine PET-Flasche mit einer Flaschenaufnahme, wie sie bei PET-Flaschen üblicherweise vorgesehen ist.

Diese Flaschenaufnahme besteht aus einem radial nach außen hinweisenden Kragen mit einer für solche Flaschen üblichen Durchmesser und Dicke D und der Kragen befindet sich auch bei derlei Flaschen an einem vorbestimmten Abstand, von der Öffnung der Flasche aus gesehen.

Figur 5 zeigt eine PET-Preform, also eine noch nicht völlig ausgebildete Flasche, jedoch die Öffnung der Flasche mit dem Kragen und dem Gewinde ist bereits vollständig ausgeformt.

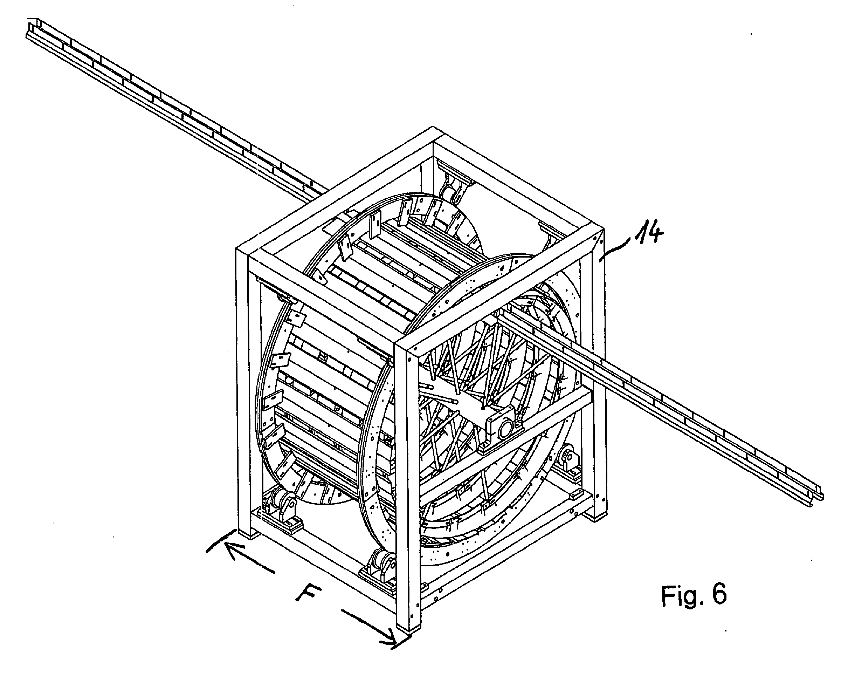

Figur 6 zeigt einen weiteren perspektivischen Blick auf die erfindungsgemäße Einrichtung, wobei die gesamte Einrichtung von einem Rahmen 14 aufgenommen wird.

Nicht dargestellt ist der konkrete Antrieb selbst, dieser kann aus einem Kettenantrieb bestehen, also einer Kette, die einerseits im Eingriff mit einem Antriebszahnrad steht und welche den gesamten rotierenden Teil der erfindungsgemäßen Einrichtung umfasst. Es ist aber auch möglich, einen Rollreibantrieb oder einen Riemenantrieb oder dergl. vorzusehen.

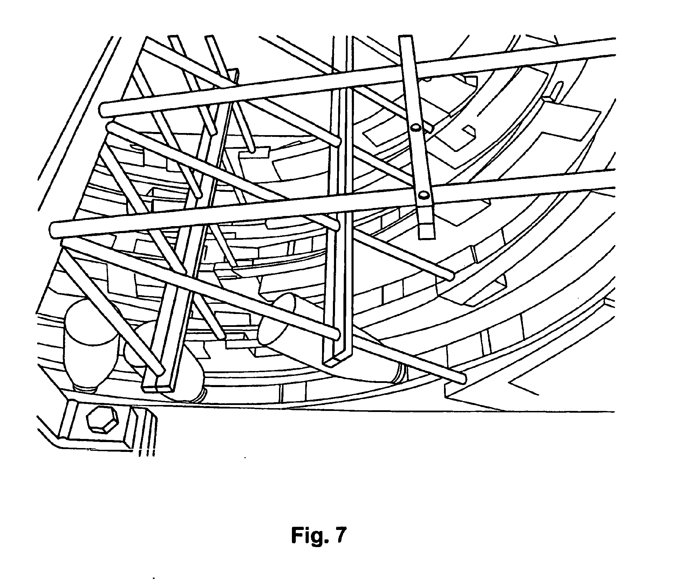

Figur 7 zeigt einen Blick in die erfindungsgemäße Einrichtung beim Betrieb.

Dort ist der Verlauf der schneckenförmigen Materialabschnitte zu erkennen wie auch des rotierenden umfahrenden Teils und mit einigen Flaschen, die in den Öffnungen 9 stecken.

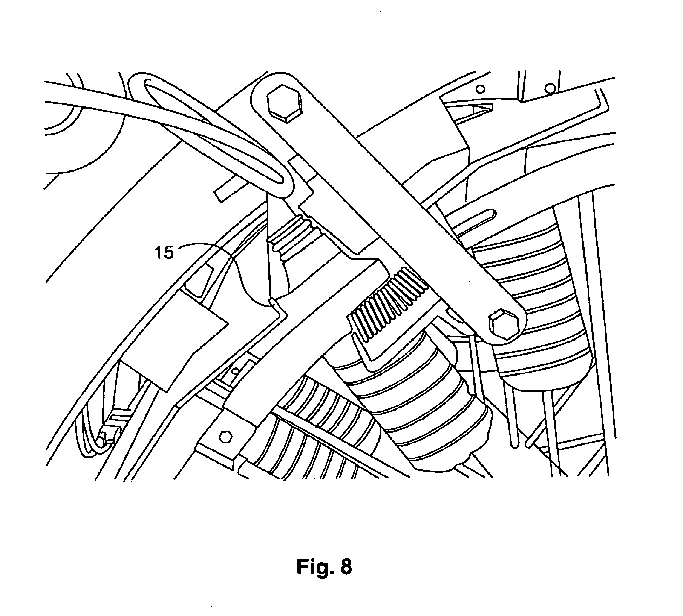

Figur 8 zeigt die Seitenansicht einer erfindungsgemäßen Einrichtung und hierbei ist zu erkennen, wie die Materialabschnitte des umlaufenden rotierenden Teils ausgebildet sind, nämlich dort mit einer nach oben gebogenen Kante, mittels der die Schiebekraft auf die Flaschen übertragen wird.

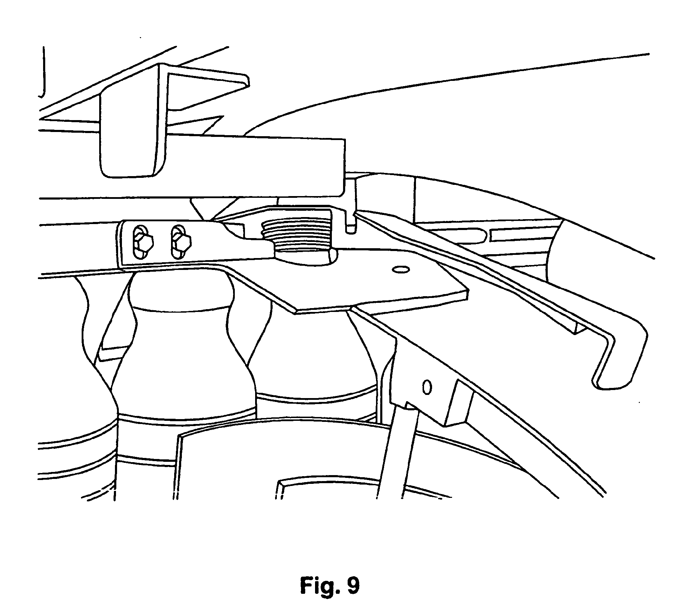

Figur 9 zeigt die erfindungsgemäße Einrichtung im Bereich des Einlaufs.

In dem dargestellten Beispiel ist der Umlaufweg, also der Weg, den die Flaschen beim Umlauf insgesamt zurücklegen, etwa 5 - 9 mal, bevorzugt 7 mal so groß, wie der Weg in Richtung Transportrichtung oder anders ausgedrückt, der Umlaufweg ist ca. 7 mal so groß wie die Breite F der erfindungsgemäßen Vorrichtung.

Nicht dargestellt sind einzelne außenseitig angeordnete Einrichtungen zur Bearbeitung der bewegten und gewendeten Flaschen.

So kann in einem bestimmten Abschnitt vorgesehen sein, dass entlang des Fahrweges der Flaschen (der Fahrweg bleibt für alle Flaschen identisch) ein Desinfektionsmittel an einer Stelle in das Flascheninnere eingetragen wird und einem weiteren darauffolgenden Abschnitt wird dann das Innere der Flaschen gereinigt, z. B. auch getrocknet, nämlich durch das Einblasen von Luft oder dergl.

Die Ausbildung solcher Bearbeitungsstationen entlang des Fahrweges der Flaschen ist für den Fachmann selbstverständlich und bedarf hier keiner weiteren detaillierten Erläuterung.

So ist die Länge einer jeweiligen Bearbeitungsstation stets auf den gewünschten Zweck und die Geschwindigkeit der Flaschen in der erfindungsgemäßen Wendestation abzustellen.

Es ist auch möglich, dass schon vor dem Verlassen der Flaschen aus der gesamten Wendestation, also dann, wenn die Flaschen das letzte Mal mit ihrer Öffnung nach oben hin im Bereich des Ausgangs erscheinen, dort bereits ein Vitaminpräparat oder ein anderes Lebensmittel in die Flasche eingefüllt wird.

Die Erfindung sei nachstehend noch einmal wie folgt zusammengefasst:

Bei der erfindungsgemäßen Vorrichtung handelt es sich um eine Maschine, bei der in ihrem Inneren ein als Trommel ausgeführtes, spiralförmiges Schienensystem (Figur 1) installiert ist. Außen herum sind rotierende Mitnehmerbleche, die für den gleichbleibenden Abstand der Flaschen und der Drehbewegung sorgen (Figur 2). Durch die spiralförmige, feststehende Schiene mit den rotierenden Blechen entstehen kleine drehende, viereckige Öffnungen, mit denen der Flaschenhals "eingehängt" ist und während der gesamten Verweildauer der Flaschen in der Vorrichtung auch so bleibt.

Die Flaschen werden im Einlauf und/oder im Auslauf über einen sog. Jet-Stream, der mit Hepa-Luft angetrieben wird, eingeführt oder herausgeführt.

Ein solches Jet-Stream-System ist bereits bekannt.

Dadurch werden die Flaschen taktgerecht in das spiralförmige Schienensystem des erfindungsgemäßen Flaschenwenders übergeben. Die Flaschen werden von den Blechen unterhalb des Flaschenhalses (Figur 3 und 4) aufgenommen und während der gesamten Dauer des Prozesses an dieser Stelle gehalten.

Während der Drehung können über Einspritzdüsen verschiedene Flüssigkeiten zur Reinigung und/oder Sterilisation/Desinfektion in die Flaschen eingespritzt werden. In einem weiteren Arbeitsschritt werden die Flaschen mittels Hepa-Luft ausgeblasen und dabei von innen getrocknet. An sich ist es möglich, verschiedene Getränkebeigaben, z. B. Vitamine, in die Flaschen mit genau bestimmter Menge einzubringen.

Nach dem kundenspezifischen Prozess wird die Flasche oder der Rohling wieder ins Jet-Stream-System übergeben und weiteren Maschineneinheiten in der gesamten Abfülllinie zugeführt.

Die erfindungsgemäße Einrichtung ist mithin Teil einer gesamten Abfülllinie und hat den besonderen Vorteil, dass sie, obwohl nur sehr geringen Platz benötigend, doch eine Vielzahl von vorgeschriebenen oder notwendigen oder wünschenswerten Bearbeitungsschritten in der gesamten Abfülllinie erfüllt.

## Patentansprüche

1. Vorrichtung zum wenigstens einmaligen, bevorzugt mehrmaligen Wenden eines Behältnisses mit einer Öffnung, wobei durch die Wendung des Behältnisses die Behältnisöffnung wenigstens einmal nach unten und zum Erdboden hin gerichtet ist,
wobei die Vorrichtung aus einem stehenden Teil (2, 3) und einem rotierenden Teil (10) besteht,
wobei der stehende Teil nach Art einer Schnecke ausgebildet ist und ein schneckenförmig verlaufender Abschnitt (2) ausgebildet ist, in welchem das Behältnis, vorzugsweise die Öffnung des Behältnisses aufnehmbar ist,
dass in dem schneckenförmig verlaufenden Abschnitt ein schneckenförmig verlaufender Spalt mit einer vorbestimmten und im Wesentlichen gleichbleibenden Breite (B) vorgesehen ist, welcher zur Aufnahme des Behältnisses, vorzugsweise der Öffnung des Behältnisses geeignet ist, so dass beim Verfahren des Behältnisses entlang des Spalte das Behältnis sowohl gewendet wird, als auch gleichzeitig in eine Transportrichtung (T) die im Wesentlichen parallel zur zentrischen Achse der Schnecke ausgebildet ist, verfahren wird und dass ein Schneckeneinlauf (S) vorgesehen ist, in welchem das Behältnis in die Schnecke eingeführt wird und ein Schneckenauslauf (6) vorgesehen ist, an dem die Schnecke aus der Schnecke herausgeführt wird, **dadurch gekennzeichnet, dass** der votierenden Teil (10) dem stehenden Teil (2, 3) umfährt und dass der umfahrende, rotierende Teil aus einer Mitnehmereinrichtung besteht, welche Leisten, Bleche oder dergl. aufweist, die in Transportrichtung (T) ausgerichtet sind und die voneinander beabstandet sind, wobei der Abstand (C) wenigstens so groß ist, dass Behältnis mit seiner Öffnung zwischen den Leisten durchsteckbar ist und dass der stehende Teil und der umlaufende, rotierende Teil der Vorrichtung voneinander so weit beabstandet sind, dass bei der Aufnahme des Behältnisses wenigstens ein nach außen radial streckender Abschnitt des Behältnisses im Bereich der Behältnisöffnung zur Anlage kommt und der radial erstreckende Abschnitt einen größeren Durchmesser aufweist, als der Abstand (B) des schneckenartig verlaufenden Spaltes und/oder des Abstands (C) der Leisten.

2. Vorrichtung nach Anspruch 1,
**dadurch gekennzeichnet, dass** beim Behältnistransport das Behältnis an wenigstens vier Stellen im Bereich der Behältnisöffnung von der Vorrichtung berührt wird,
wobei bevorzugt zwei der Berührungsstellen an die gegenüberliegenden Seiten des Behältnisses unterhalb der Behältnisaufnahmen liegen und zwei der Berührungsstellen oberhalb der Behältnisaufnahme liegen,
wobei die Berührungsstellen oberhalb der Behältnisaufnahme im Wesentlichen um 90 Grad versetzt liegen.

3. Vorrichtung nach einem der vorhergehenden Ansprüche,
**dadurch gekennzeichnet, dass** im Bereich des Einlaufs (S) in die Vorrichtung eine Behältnistransporteinrichtung vorhanden ist, um ein zu wendendes Behältnis in die Vorrichtung zu transportieren.

4. Vorrichtung nach einem der vorhergehenden Ansprüche,
**dadurch gekennzeichnet, dass** im Bereich des Auslaufs (6) eine Vorrichtung vorhanden ist, um ein Behältnis aus dem Bereich der Einrichtung weg zu transportieren.

5. Vorrichtung nach einem der vorhergehenden Ansprüche,
**dadurch gekennzeichnet, dass** bei einer Einrichtung mit mehreren Wendeschleifen (Schnecken), in bevorzugt jeder Wendeschleife, über einen bestimmten Schneckenumfang hinweg dass ein Behältnis an einer außenseitig an der Vorrichtung angeordneten Arbeitsstation vorbeiführbar ist,
wobei eine Arbeitsstation ausgebildet sein kann, die zur Desinfektion des Inneren des Behältnisses ausgebildet ist, und/oder eine Arbeitsstation ausgebildet sein kann, um das Innere des Behältnisses nach einem Desinfektionsarbeitsgang zu trocknen oder dergl.

6. Vorrichtung nach einem der vorhergehenden Ansprüche,
**dadurch gekennzeichnet, dass** nach der letzten Wendung des Behältnisses also dieses ein letztes Mal mit seiner Öffnung zum Boden hin nach unten ausgerichtet war, eine Arbeitsstation vorgesehen ist, um das Behältnis mit einer Flüssigkeit, einem Präparat oder einem Lebensmittel oder dergl. einzufüllen.

7. Vorrichtung nach einem der vorhergehenden Ansprüche,
**dadurch gekennzeichnet, dass** der umlaufende, rotierende Teil der Vorrichtung durch ein Kettenantrieb oder ein Reibradantrieb oder dergl. angetrieben wird,
wobei die Drehgeschwindigkeit bevorzugt auf die Behältnistransportgeschwindigkeit am Einlauf bzw. Auslauf abgestimmt ist, um somit einen kontinuierlichen Behältnistransport zu ermöglichen.

8. Verfahren zur mehrfachen Wendung von Behältnissen, die eine Öffnung aufweisen, wobei die Behältnisse wenigstens einmal, bevorzugt mehrmalig mittels einer Vorrichtung nach einem der vorhergehenden Ansprüche 1 bis 7 quer zu einer linearen Transportrichtung (T) gewendet werden, wobei bei einem Wendevorgang das Behältnis mit der Öffnung einmal nach unten In Richtung dem Boden und einmal zur entgegengesetzten Seite, also vom Boden abgewendet, also nach oben ausgerichtet ist und bei jeder Wendung ein Behältnis an einer oder mehreren Arbeitsstationen vorbeiführbar ist, wobei eine Arbeitsstation zur Desinfektion, eine Arbeitsstation zur Reinigung, eine Arbeitsstation zur Trocknung und/oder eine Arbeitsstation zur Befüllung des Behältnisses mit einem Lebensmittel oder Lebensmittelpräparat vorgesehen sein kann.

## Claims

1. A device for the at least one-time, preferably repeated, turning round of a container with an opening,
wherein through the turning round of the container, the container opening is at least once directed downward and towards the ground,
wherein the device consists of a stationary part (2, 3) and a rotating part (10),
wherein the stationary part is in the manner of a screw and a helically running portion (2) is formed in which the container, preferably the opening of the container, can be received,
in that a helically running gap with a predetermined and substantially instant width (B) is provided in the helically running portion and is suitable for receiving the container, preferably the opening of the container, so that when the container travels along the gap, the container is both turned round and simultaneously moved in a transport direction (T) substantially parallel to the central axis of the screw and in that a screw entry (5) Is provided in which the container Is guided into the screw and a screw exit (6) is provided at which the screw is guided out of the screw, **characterised in that** the rotating part (10) travels around the stationary part (2, 3) and **in that** the circulating, rotating part consists of an entraining device having strips, metal sheets or the like directed in the transport direction (T) and spaced apart from one another, wherein the spacing (C) is at least large enough that the container can be placed between the strips with its opening, and **in that** the stationary part and the circulating, rotating part of the device are spaced far enough from one another that when the container is received, at least one outwards radially extending portion of the container makes contact in the region of the container opening and the radially extending portion has a larger diameter than the spacing (B) of the helically running gap and/or the spacing (C) of the strips.

2. A device according to claim 1, **characterised in that** during container transport, the container is contacted by the device at at least four sites in the region of the container opening,
wherein preferably two of the contact sites lle on the opposite sides of the container, below the container receivers, and two of the contact sites lie above the container receiver,
wherein the contact sites above the container receiver lie displaced through substantially 90 degrees.

3. A device according to any one of the preceding claims, **characterised in that** a container transport device is present in the region of the entry (5) into the device, in order to transport Into the device a container to be turned round.

4. A device according to any one of the preceding claims, **characterised in that** in the region of the exit (6) there is present a device to transport a container away from the region of the device.

5. A device according to any one of the preceding claims, **characterised in that** in the case of a device with a plurality of turning loops (screws), in preferably each turning loop, over a certain screw circumference, that a container can be guided past a work station arranged externally on the device;
wherein a work station can be constructed which is constructed for disinfection of the Interior of the container, and/or a work station can be constructed in order to dry the interior of the container after a disinfection operation or the like.

6. A device according to any one of the preceding claims, **characterised in that** after the final turning round of the container, therefore the opening of the latter was for a last time directed downward toward the ground, a work station is provided to fill the container with a fluid, a preparation or a foodstuff or the like.

7. A device according to any one of the preceding claims, **characterised in that** the circulating, rotating part of the device is driven by a chain drive or a friction drive or the like,
wherein the rotational speed is preferably suited to the container transport speed at the entry or exit, in order to consequently enable continuous container transport.

8. A method for the repeated turning round of containers having an opening, wherein the containers are turned round transversely to a linear transport direction (T) at least once, preferably repeatedly, by means of a device according to any one of the preceding claims 1 to 7, wherein in a turning round procedure the opening of the container is once directed downward in the direction of the ground and once directed to the opposite side, therefore away from the ground, therefore is directed upward, and a container can be guided past one or more work stations during each turning round operation, wherein a work station for disinfection, a work station for cleaning, a work station for drying and/or a work station for filling the container with a foodstuff or foodstuff preparation can be provided.

## Revendications

1. Dispositif pour retourner au moins une fois, de préférence plusieurs fois, un récipient doté d'une ouverture, l'ouverture du récipient étant dirigé au moins une fois vers le bas et en direction du sol lors du retournement du récipient,
le dispositif étant constitué d'une partie fixe (2, 3) et une partie rotative (10),
la partie fixe étant conformée en hélice et une portion (2) s'étendant hélicoïdalement, dans laquelle le récipient, de préférence l'ouverture du récipient, peut être reçu, étant conformée de telle sorte que
dans la portion s'étendant hélicoïdalement est ménagée une fente s'étendant hélicoïdalement, d'une largeur (B) prédéterminée et sensiblement constante, qui est destinée à recevoir le récipient, de préférence l'ouverture du récipient, de sorte que, lorsque le récipient est déplacé le long de la fente, le récipient est retourné tout en étant déplacé dans une direction de transport (T) qui est conformée sensiblement parallèlement à l'axe central de l'hélice et
une entrée d'hélice (5) est prévue dans laquelle le récipient est introduit dans l'hélice et une sortie d'hélice (6) est prévue au niveau de laquelle le récipient est sorti de l'hélice,
**caractérisé en ce que** la partie rotative (10) fait le tour de la partie fixe (2, 3) et **en ce que** la partie rotative, faisant le tour, est constituée d'un système d'entraînement qui comporte des baguettes, des tôles ou analogue qui sont orientées dans la direction de transport (T) et qui sont placées à distance l'une de l'autre, la distance (c) ayant au moins une grandeur telle que le récipient est passé, au niveau de son ouverture, entre les baguettes et **en ce que** la partie fixe et la partie mobile rotative du dispositif sont disposées à distance l'une de l'autre telle que, lors de la réception du récipient, au moins une portion, s'étendant radialement vers l'extérieur, du récipient vient en appui dans la région de l'ouverture de récipient et la portion s'étendant radialement a un diamètre supérieur à la largeur (B) de la fente s'étendant hélicoïdalement et/ou à la distance (c) entre les baguettes.

2. Dispositif selon la revendication 1, **caractérisé en ce que**, lors du transport du récipient, le récipient est en contact avec le dispositif en au moins quatre endroits dans la région de l'ouverture du récipient,
de préférence deux des endroits de contact se trouvant sur les côtés opposés du récipient au-dessous du logement de récipient et deux des endroits de contact se trouvant au-dessus du logement de récipient,
les endroits de contact au-dessus du logement de récipient étant placés en étant sensiblement décalés de 90°.

3. Dispositif selon l'une des revendications précédentes, **caractérisé en ce que** dans la région de l'entrée (5) dans le dispositif il est prévu un système de transport de récipient destiné à transporter un récipient à retourner jusque dans le dispositif.

4. Dispositif selon l'une des revendications précédentes, **caractérisé en ce que** dans la région de la sortie (6) il est prévu un dispositif destiné à faire sortir un récipient de la région du système.

5. Dispositif selon l'une des revendications précédentes, **caractérisé en ce que**, dans le cas d'un système comportant plusieurs boucles de retournement (hélices), de préférence dans chaque boucle de retournement, un récipient peut être amené à une station de travail, disposée à l'extérieur du dispositif, au-delà d'une périphérie d'hélice déterminée,
une station de travail pouvant être conformée pour désinfecter l'intérieur du récipient et/ou une station de travail pouvant être conformée pour sécher l'intérieur du récipient ou analogue après la désinfection.

6. Dispositif selon l'une des revendications précédentes, **caractérisé en ce que** après le dernier retournement du récipient, donc après que celui-ci a été orienté vers le bas une dernière fois avec son ouverture pointant vers le sol, il est prévu une station de travail destinée à remplir le récipient avec un liquide, une préparation ou un aliment ou analogue.

7. Dispositif selon l'une des revendications précédentes, **caractérisé en ce que** la partie mobile rotative du dispositif est entraînée par un entraînement à chaîne ou un entraînement par roue de friction,
la vitesse de rotation étant de préférence réglée sur la vitesse de transport de récipient au niveau de l'entrée ou de la sortie afin de permettre ainsi un transport de récipient continu.

8. Procédé pour retourner plusieurs fois des récipients qui comportent une ouverture, les récipients étant retournés au moins une fois, de préférence plusieurs fois au moyen d'un dispositif selon l'une des revendications précédentes 1 à 7, transversalement à une direction de transport linéaire (T), dans un processus de retournement le récipient étant orienté une fois avec l'ouverture vers le bas en direction du sol et une fois en direction du côté opposé, donc à l'opposé du sol, donc vers le haut et à chaque retournement un récipient étant amené à une ou plusieurs station de travail, une station de travail pouvant être destinée à la désinfection, une station de travail pouvant être destinée au nettoyage, une station de travail pouvant être destinée au séchage et/ou une station de travail pouvant être destinée au remplissage du récipient avec un aliment ou une préparation alimentaire.
